# EUROPEAN PATENT SPECIFICATION

(11) **EP 2 127 524 B1**
(45) Date of publication and mention of the grant of the patent: **05.11.2014**
(21) Application number: 08702806.4
(22) Date of filing: 23.01.2008
(51) Int. Cl.: A21D 2/36, A23L 1/00

(54) **BREAD COMPRISING A CATECHIN CONTAINING PLANT EXTRACT**
BROT, WELCHES EIN CATECHINHALTIGES PFLANZENEXTRAKT ENTHÄLT
PAIN COMPRENANT UN EXTRAIT DE PLANTE COMPRENANT DES CATÉCHINES

(30) Priority: 24.01.2007 JP 2007014295
(43) Date of publication of application: 02.12.2009
(73) Proprietor: Kao Corporation, Chuo-Ku Tokyo 103-8210 (JP)
(72) Inventor: KAMEO, Yoji, Tokyo 131-8501 (JP)
(74) Representative: Hoffmann Eitle
(86) International application number: PCT/JP2008/000065
(87) International publication number: WO 2008/090739

(56) References cited:
- EP-A1- 0 423 419
- JP-A- 10 313 768
- JP-A- 2003 299 440
- JP-A- 2006 174 755
- JP-A- 2007 001 893
- US-A1- 2003 096 050

## Description

### Field of the Invention

This invention relates to a bread with catechins added therein.

### Background of the Invention

Catechins are known to have physiological effects, such as α-amylase activity inhibiting effect and cholesterol absorption inhibiting effect, in addition to the widely-known function as an antioxidant (Patent Documents 1 and 2), and their addition in various foods has been under research in recent years. As such catechins, those obtained fromplants such as tea, grapes, apples and soybeans are widely used as they are to be added to foods.

Concerning breads such as white loaves, there is an outstanding desire for those which are light and have high volume expansion percentage and good texture. As a technology for this desire, it is practiced *inter alia* to add an emulsifier, oil or fat, carbohydrates or the like or to add an emulsion composed of these ingredients, or to add an enzyme.

Under these circumstances, a variety of breads with a tea extract or the like incorporated therein has been proposed to date. It has, however, been difficult to make bread that contains catechins at a high concentration enough to expect the above-described physiological effects and is good in quality including texture, because bread is allowed to rise by trapping therein gas produced by yeast and hence requires the kneading of ingredients including wheat flour as a main ingredient together with water to prepare dough having viscoelasticity. For the development of this viscoelasticity, the insoluble protein (gluten), a main component of wheat flour, plays an important role. On the other hand, a catechins-containing tea extract or tea tannins, for its own reducing power, reduces S-S bonds, which play an important role for the development of gluten viscoelasticity, or reacts first with an oxidizing agent such as ascorbic acid added to promote S-S bonding. The catechins-containing tea extract or tea tannins is, therefore, accompanied by a drawback that, when it is added at high concentration, the resulting dough is provided with significantly reduced viscoelasticity, thereby making the breadmaking difficult.

As a matter of fact, in a patent document disclosing the addition of catechins to bread, the amount of added catechins is from 0.001 to 0.005 g per 100 g of breadmaking grain flour, and therefore, is also very small (Patent Document 3).

Further, Patent Document 4 discloses a technology for the preparation of a dough composition, which includes adding tannins (polyphenol such as catechin, tannic acid, flavone and anthocyanine) to a dough such that the tannin amounts to from 0.05 to 1.0 weight parts per 100 weight parts of wheat flour. Described specifically, however, Patent Document 4 makes reference only to improvements in the quality of bread after heated in a microwave oven when tannic acid is added, and makes no mention about cases in which catechins are added (Patent Document 4).
[Patent Document 1] JP-A-60-156614
[Patent Document 2] JP-A-03-133928
[Patent Document 3] JP-A-2005-269996
[Patent Document 4] JP-A-10-313768

### Disclosure of the Invention

JP 2003299440 relates to a green tea processed article and to a wheat flour product into which the article is mixed. The method for producing the green tea processed article comprises immersing green tea leaves in water to form a liquid, adding at least one kind of compound selected from alkaline salts and alkalis to the liquid so as to control a pH of the liquid at 7-8.5, heating the liquid at 70-120°C, and rapidly cooling the liquid.

The present invention provides a bread obtainable by adding a purified product of catechins-containing plant extract to grain flour such that from 0.2 to 0.5 weight parts of catechins can be incorporated per 100 weight parts of the grain flour, and then conducting baking, wherein a ratio of a content of catechins as measured by high-performance liquid chromatography to a content of tannins as measured by the ferrous tartrate method in the purified product of catechins-containing plant extract (hereinafter called "the catechins/tannins weight ratio") is from 0.81 to 1.10.

### Modes for Carrying out the Invention

However, when a bread is made, for example, by adding such a tea extract as mentioned above in a large amount such that the tea extract accounts for 0.2 weight parts or more in terms of catechins per 100 weight parts of grain flour composed primarily of wheat flour to bring about the physiological effects of catechins, the bread is provided with a reduced flavor due to the emergence of bitterness, astringency and the like originated from the extract. A further problem that the thus-obtained bread is also hard, poor in texture and low in brightness has also been found to arise.

The present invention, therefore, provides a bread, which contains catechins in such a physiologically-preferred amount of 0.2 weight parts or more in terms of catechins per 100 weight parts of grain flour composed primarily of wheat flour and which is good in texture, volume, brightness and flavor.

The present inventors made breads by using various catechin-containing ingredients, and devoted themselves to research their textures, flavors, etc. As a result, it has been unexpectedly found that, upon making a bread by adding a purified product of catechins-containing plant extract such that from 0.2 to 0.5 weight parts of catechins can be incorporated per 100 weight parts of grain flour, the use of a purified product of catechins-containing plant extract, said purified product having a catechins/tannins weight ratio of from 0.81 to 1.10, makes it possible to provide the bread with high brightness, a soft and moist texture an also a good flavor compared with the use of one having a lower catechins/tannins weight ratio even when the amount of catechins added to the bread is the same.

The bread according to the present invention has advantageous effects that despite the addition of catechins in a large amount, the emergence of bitterness, astringency and puckeriness is limited, the brightness is high, the texture is soft, and also, the flavor is good.

The bread according to the present invention can be made by using (A) the grain flour as a principal ingredient, adding (B) the purified product of catechins-containing plant extract, an auxiliary ingredient, such that from 0.2 to 0.5 weight parts of catechins can be incorporated per 100 weight parts of the grain flour (A), and then conducting baking. It is to be noted that in the present invention, the catechins/tannins weight ratio of the purified product of catechins-containing plant extract (B) is characterized to range from 0.81 to 1.10.

The term "catechins" as used herein means non-polymer catechins, and is a generic term which collectively encompasses non-epicatechins such as catechins, gallocatechins, catechingallates and gallocatechingallates, and also, epi-catechins such as epicatechins, epigallocatechins, epicatechingallates and epigallocatechingallates.

On the other hand, the term "tannins" as used herein includes condensed tannins and hydrolysable tannins in addition to the above-mentioned catechins.

In the present invention, each amount of catechins is a value as measured by high-performance liquid chromatography under the conditions to be described in Examples, and each amount of tannins is a value as measured by the ferrous tartrate method under the conditions to be described in the Examples.

The bread according to the present invention is made by adding the purified product of catechins-containing plant extract (B) such that from 0.2 to 0.5 weight parts of catechins can be incorporated per 100 weight parts of the grain flour. From the standpoints of flavor, physiological effects, brightness, volume expansion, texture and the like, the content of the catechins may be preferably from 0.25 to 0.5 weight parts, more preferably from 0.3 to 0.5 weight parts.

In the present invention, a purified product of catechins-containing plant extract, the catechins / tannins weight ratio in said purified product being from 0.81 to 1.10, is used, because the use of such a purified product can provide the resulting bread with higher brightness, better volume expansion percentage, soft texture, reduced bitterness, astringency and the like, and better flavor compared with the use of purified products of which the catechins/tannins weight ratios are outside the range of from 0.81 to 1.10.

The catechins/tannins weight ratio of the purified product of catechins-containing plant extract (B) to be incorporated in the bread according to the present invention is from 0.81 to 1.10, with from 0.82 to 1.10 being preferred and from 0.85 to 1.10 beingmore preferred, especially from the standpoints of flavor and color tone. If the catechins/tannins weight ratio is smaller than 0.81, the incorporation of catechins results in the mixing of a great deal of other impurities so that the workability and the quality of the bread, especially its flavor are negatively influenced and is not preferred.

Further, the purified product of catechins-containing plant extract (B) may preferably have a percentage of gallate body of 75 wt% or lower. The term "percentage of gallate body" as used herein indicates the amount of gallate body in whole catechins as expressed in terms of wt%. Each percentage of gallate body can be determined by calculation, because whole catechins include gallate body such as catechingallates, gallocatechingallates, epicatechingallates and epigallocatechingallates and non-gallate body such as catechins, gallocatechins, epicatechins and epigallocatechins as described above. The use of catechins, which contain 75 wt% or less of gallate body, can facilitate the production of a bread having high brightness, good volume expansion percentage, good texture and good flavor. The percentage of gallate body may be more preferably from 5 to 70 wt%, more preferably from 10 to 65 wt%, more preferably from 20 to 60 wt%, even more preferably from 20 to 45 wt%, even more preferably from 20 to 40 wt%.

The concentration of catechins in the purified product of catechins-containing plant extract (B) may be preferably 40 wt% or higher, more preferably from 41 to 95 wt%, more preferably from 45 to 90 wt%, even more preferably from 50 to 85 wt%.

As the purified product of catechins-containing plant extract (B), one having a low caffeine content is preferred from the standpoint of reducing a caffeine-derived flavor in the bread. Therefore, its caffeine/catechins ratio (weight ratio) may be preferably 0.20 or smaller, more preferably 0.10 or smaller, even more preferably 0.06 or smaller.

Illustrative of the purified product of catechins-containing plant extract (B) include purified products of extracts of tea, grapes, apples, soybeans and the like. Among these, preferred is the purified product of green tea extract, which can be obtained, for example, by purifying a green tea extract or a concentrate of green tea extract. The term "a concentrate of green tea extract" as used herein specifically means an aqueous solution of a concentrate of green tea extract, one prepared by adding a green tea extract to the concentrate of green tea extract, powder of a green tea extract, or the like. Accordingly, the term "a concentrate of green tea extract" as used herein means one containing catechins at a concentration increased by partially removing water from a solution obtained as a result of extraction of green tea leaves with hot water or a water-soluble organic solvent. It can be in one or various forms such as a solid, an aqueous solution and a slurry. On the other hand, the term "green tea extract" as used herein means an extract which has not been subjected to concentration or purification processing. Commercial products of such a concentrate of green tea extract include "POLYPHENON" (Mitsui Norin Co., Ltd.), "TEAFURAN (ITO EN, LTD.), "SUNPHENON" (Taiyo Kagaku Co., Ltd.), and the like.

As a method for preparing the purified product of catechins-containing plant extract (B) by purifying such a concentrate of green tea extract, it is possible to mention a method that suspends the concentrate of green tea extract in water or a mixture of water and an organic solvent such as ethanol, removes the resulting precipitate, and then distills off water and/or the organic solvent.

In addition to the above-mentioned precipitate removing processing, there are also (i) a method that adds at least one adsorbent selected from activated carbon, acid clay or activated clay to a green tea extract and conducts treating; (ii) a method that treats a green tea extract with tannase; (iii) a method that treats a green tea extract with a synthetic adsorbent; and the like.

The purified product of catechins-containing plant extract (B) can also be one prepared by further purifying a concentrate of an extract obtained by extracting from tea leaves with hot water or a water-soluble organic solvent such as ethanol or one obtained by directly purifying such an extract.

As the form of the purified product of catechins-containing plant extract (B), it can be in any form such as a liquid form, a slurry form or a powder form. In bread, however, it is not desired to keep a purified product of catechins-containing plant extract in contact with the proteins in wheat flour for a long time. In the sponge-dough process, for example, it is preferred to add the purified product of catechins-containing plant extract in the main kneading step. In this main kneading step, the amount of water to be added may have to be limited to an extremely low level in some instances. It is, therefore, preferred to use a purified product of catechins-containing plant extract in a powder form the water percentage of which is lower than 10 wt%.

In the bread according to the present invention, the grain flour (A) is used as a principal ingredient, and as auxiliary ingredients, oil or fat (C), sugars (D), yeast, yeast food, water, dairy products, salt, seasonings (sodium glutamate and nucleic acids), preservatives, enriching agents such as vitamins and calcium, proteins, emulsifiers, amino acids, chemical leavening agents, flavors, colors, dry fruits such as raisins, nuts, wheat bran, whole wheat flour, chocolate and chocolate products, and the like can be used as desired, in addition to the purified product of catechins-containing plant extract (B). Further, polysaccharide thickeners can also be used as desired.

As the grain flour (A) for use in the present invention, any grain flour can be added insofar as it is commonly employed in breads. Examples include starches obtained from wheat flour, rice flour, corn, glutinous corn (waxy corn), tapioca and the like; modified starches thereof; and the like. As wheat flour, hard wheat flour and/or semi-hard wheat flour is mainly used, and from the viewpoint of texture improvements or the like, all-purpose wheat flour and/or soft wheat flour may also be used as a part. The above-described classification is generally defined depending on the content of proteins in wheat flour, and specifies as follows: hard flour, 11.5 to 13.0%; semi-hard flour, 10.5 to 12.5%; all-purpose flour, 7.5 to 9.0%; soft flour, 6.5 to 8.0%.

As the oil or fat (C), any oil or fat can be added insofar as it is commonly employed in breads. It can be of either animal or plant origin. A wide variety of oils and fats - e.g., those having plasticity such as butter, lard, margarine and shortening, liquid oils, hardened oils or fats(solid oils or fats) obtained by hydrogenating such liquid oils, and interesterified oils or fats - can be used either singly or in combination. From the standpoint of breadmaking workability and flavor, the amount of the oil or fat (C) may be preferably from 0.5 to 70 weight parts, more preferably from 1 to 60 weight parts, even more preferably from 3 to 50 weight parts per 100 weight parts of the grain flour.

As the sugars (D), any sugar can be added insofar as it is commonly employed in breads. Specific usable examples include monosaccharides such as glucose, fructose and galactose; disaccharides to polysaccharides such as maltose, sucrose, malt sugar, starch syrup, isomerized sugar, inverted sugar, cyclodextrin, branched cyclodextrin, and dextrin: and reducing sugars such as starch hydrolysates. These sugars can be used either singly or in combination. The amount of the sugars (D) in the present invention may bepreferably from 0.5 to 30 weight parts, more preferably from 1 to 27 weight parts, even more preferably from 2 to 25 weight parts per 100 weight parts of the grain flour from the standpoints of workability and flavor.

As other sweeteners, sugar alcohols such as sorbitol, maltitol and xylitol; and sucralose, aspartame and acesulfame potassium; and the like can also be used.

Protein may preferably be added for nutritional enrichment and texture improvement. Any protein can be used insofar as from the viewpoint of texture improvement, it exhibits viscosity when dissolved in water. Illustrative are milk proteins, animal proteins, plant proteins, and the like. The milk proteins include sodium casein, calcium casein, rennet casein, milk casein, milk whey, lactalbumin, lactoglobulin, and the like. These proteins can be used singly, or two or more proteins selected from them can be used as mixed. The amount of the protein in the present invention may be preferably from 0.01 to 20 weight parts, more preferably from 0.1 to 15 weight parts, even more preferably from 0.5 to 10 weight parts per 100 weight parts of the grain flour from the standpoints of texture and flavor.

As an emulsifier, any emulsifier can be added insofar as it is commonly employed in breads. Examples include glycerin fatty acid esters, sucrose fatty acid esters, sorbitan fatty acid esters, propylene glycol fatty acid esters, lecithin, lecithin derivatives, and the like. It is, however, preferred to use as mixed two or more emulsifiers selected from them because the dispersibility of the emulsifiers themselves can be improved, the workability can be improved, and the prevention of aging in texture especially during storage can be achieved. Especially from the viewpoints of breadmaking workability and the prevention of aging, the use of glycerin fatty acid esters is preferred. The amount of the emulsifier in the present invention may be preferably from 0.1 to 10 weight parts, even more preferably from 0.2 to 7 weight parts per 100 weight parts of the grain flour from the standpoints of workability improvement and the prevention of aging during storage.

Examples of the breads according to the present invention include white loaves (Pullman loaves, round-top loaves), special breads such as muffins, sandwich rolls and sweet buns, and breads in which a fillings are stuffed thereinto. Describes specifically, the white loaves include white breads, brown breads, French breads, variety breads, and rolls (table rolls, buns, butter rolls, and the like). The special breads include muffins and the like, the sandwich breads include hotdogs, hamburgers and the like, and the sweet buns include jam buns, Azuki (bean jam) buns, cream buns, raisin buns, half-melon shaped buns, sweet rolls, rich goods (croissants, brioches, Danish pastries) and the like.

As the making process of the bread according to the present invention, no particular limitation is imposed, and the straight process (straight dough process), the sponge-dough process or the basic sweet dough process can be mentioned. The baking conditions are determined as desired depending on the type of the bread.

### Examples

(Measurement method of non-polymer catechins) Measurement of non-polymer catechins in a catechin preparation was conducted as will be described hereinafter. A high-performance liquid chromatograph (model: "SCL-10AVP") manufactured by Shimadzu Corporation wasused. The chromatograph wasfitted with a liquid chromatograph column packed with octadecyl-introduced silica gel, "L-Column, TM ODS" (4.6 mm in diameter × 250 mm; product of Chemicals Evaluation and Research Institute, Japan). The catechin preparation was diluted with distilled water, and subsequent to filtration through a filter (pore size: 0.8 µm), the resulting sample solution was subjected to chromatography at a column temperature of 35°C by the gradient elution method making use of a solution A and a solution B. The solution A, mobile phase, was a solution containing acetic acid of 0.1 mol/L in distilled water, while the solution B, mobile phase, was a solution containing acetic acid of 0.1 mol/L in acetonitrile. The measurement was conducted under the conditions of 20 µL sample injection volume and 280 nm UV detector wavelength.

### (Measurement method of tannins)

Using ethyl gallate as a standard solution, tannins were measured in terms of an equivalent amount of gallic acid by the ferrous tartrate method (referential publication: "Green Tea Polyphenols", Technology Series for the Effective Utilization of Functional Ingredients for Beverages and Foods, No. 10). A sample (5 mL) was stained with the standard ferrous tartrate solution (5 mL). With a phosphate buffer, the volume of the thus-stained sample was adjusted to 25 mL. Its absorbance was measured at 540 nm, and from a calibration line for ethyl gallate, the content of tannins was determined.

Preparation of the standard ferrous tartrate solution: Ferrous sulfate heptahydrate (100 mg) and potassium sodium tartrate (500 mg) were dissolved with distilled water to 100 mL.

Preparation of the phosphate buffer: 1/15 mol/L solution of disodium hydrogenphosphate and 1/15 mol/L solution of sodium dihydrogenphosphate were mixed to give pH 7.5.

### (Measurement method of caffeine)

The following system was used.
HPLC (manufactured by Hitachi, Ltd.) was used. Plotter: "D-2500", Detector: "L-4200",
Pump: "L-7100", Autosampler: "L-7200",
Column: "Inertsil ODS-2" (2.1 mm inner diameter x 250 mm length).

The following analytical conditions were used.
Injected sample quantity: 10 µL
Flow rate: 1.0 mL/min
Detection wavelength of UV absorptiometer: 280 nm
Eluent A: 0.1 M solution of acetic acid in water
Eluent B: 0.1 M solution of acetic acid in acetonitrile Concentration gradient conditions (vol%)

| Time | Eluent A | Eluent B |
|---|---|---|
| 0 min | 97 | 3 |
| 5 min | 97 | 3 |
| 37 min | 80 | 20 |
| 43 min | 80 | 20 |
| 43.5 min | 0 | 100 |
| 48.5 min | 0 | 100 |
| 49 min | 97 | 3 |
| 62 min | 97 | 3 |

The retention time of caffeine was 27.2 minutes. From each area % determined here, the corresponding wt.% was determined based on the standard substance.

### (Measurement method of the water percentage of catechin preparation)

A portion (2 to 3 g) of a catechin preparation was weighed, and was then placed for 2 hours in a constant-temperature chamber set at 105°C. Using, as its water content, a difference in weight before and after the drying, the water content was divided by the weight of the portion of the catechin preparation before the drying. The percentage of the quotient was used as the water percentage of the catechin preparation.

### Production Examples

### (Concentrate of green tea extract: "POLYPHENON HG")

The concentration of non-polymer catechins in the solid contents was 33.7 wt%.

The percentage of gallate body was 51 wt%.

The non-polymer catechins/tannins weight ratio was 0.69.

### (Catechin preparation (i) - "POL-JK", product of Mitsui Norin Co., Ltd.)

The concentration of non-polymer catechins in the solid contents was 30.6 wt%.

The percentage of gallate body was 50 wt%.

The non-polymer catechins/tannins weight ratio was 0.80.

The water percentage of the catechin preparation (i) was 6.8 wt%.

### (Production of catechin preparation (ii))

A concentrate of green tea extract ("POLYPHENON HG", product of Tokyo Food Techno Co. , Ltd.; 200g) was dispersed in a 68 wt% aqueous solution of ethanol (800 g) at ambient temperatures under the stirring conditions of 250 r/min, and after addition of acid clay ("MIZUKA ACE #600", product of Mizusawa Chemical Industries, Ltd.; 35 g), stirring was continued for approx. 10 minutes. Subsequently, the resulting mixture was filtered through No. 2 filter paper. Activated carbon (20 g) was then added to the filtrate, and the thus-obtained mixture was filtered again through No. 2 filter paper. Re-filtration was next conducted through a membrane filter of 0.2 µm pore size. Deionized water (200 g) was added to the filtrate, the ethanol was distilled off at 40°C and 0.0272 kg/cm², and with deionized water, the concentration of catechins was adjusted to obtain a purified product of concentrate of green tea extract. The purified product was then freeze-dried to afford a powdery catechin preparation (ii).

The concentration of non-polymer catechins in the solid contents in the catechin preparation (ii) was 42.3 wt%.

The non-polymer catechins / tannins weight ratio of the catechin preparation (iii) was 0.81.

The percentage of gallate body in the catechin preparation (ii) was 51 wt%.

The water content of the catechin preparation (ii) was 5.4 wt%.

### (Production of catechin preparation (iii))

A concentrate of green tea extract ("POLYPHENON HG", product of Tokyo Food Techno Co., Ltd.; 200g) was dispersed in a 95 wt% aqueous solution of ethanol (800 g) at ambient temperatures under the stirring conditions of 250 r/min, and after addition of acid clay ("MIZUKA ACE #600", product of Mizusawa Chemical Industries, Ltd.; 100 g), stirring was continued for approx. 10 minutes. Subsequently, the resulting mixture was filtered through No. 2 filter paper. Activated carbon (20 g) was then added to the filtrate, and the thus-obtained mixture was filtered again through No. 2 filter paper. Re-filtration was next conducted through a membrane filter of 0. 2 µm pore size. Deionized water (200 g) was added to the filtrate, the ethanol was distilled off at 40°C and 0.0272 kg/cm², and with deionized water, the concentration of catechins was adjusted to obtain a purified product of concentrate of green tea extract. The purified product was then freeze-dried to afford a powdery catechin preparation (iii).

The concentration of non-polymer catechins in the solid contents in the catechin preparation (iii) was 62.5 wt%.

The non-polymer catechins/tannins weight ratio of the catechin preparation (iii) was 0.94.

The percentage of gallate body in the catechin preparation (iii) was 51 wt%.

The water percentage of the catechin preparation (iv) was 3.2 wt%.

### (Production of catechin preparation (iv))

Hot water of 88°C (45 kg) was added to green tea leaves (produce of Kenya, large leaf variety; 3 kg). After batchwise extraction for 60 minutes under stirring, coarse filtration was conducted through a 100-mesh screen. To remove fine powder from the extract, a centrifugal separation operation was performed to obtain a "green tea extract" (36.8 kg, pH 5.3) (the concentration of non-polymer catechins in the green tea extract = 0.88 wt%, the percentage of gallate body in the green tea extract = 51.6 wt%, caffeine: 0.17 wt%). A portion of the green tea extract was freeze-dried to afford a catechin preparation (iv). The concentration of non-polymer catechins in the solid contents in the catechin preparation (iv) = 32.8 wt%, the percentage of gallate body in the catechin preparation = 51.6 wt%, and the caffeine/catechins ratio of the catechin preparation (iv) = 0.193.

### (Production of catechin preparation (v))

Hot water of 88°C (45 kg) was added to green tea leaves (produce of Kenya, large leaf variety; 3 kg). After batchwise extraction for 60 minutes under stirring, coarse filtration was conducted through a 100-mesh screen. To remove finepowder from the extract, a centrifugal separation operation was then performed to obtain a "green tea extract" (36.8 kg, pH 5.3) (the concentration of non-polymer catechins in the green tea extract = 0.88 wt%, the percentage of gallate body in the green tea extract = 51.6 wt%, caffeine: 0.17 wt%). The green tea extract was kept at the temperature of 15°C, and tannase ("TANNASE KTFH", product of Kikkoman Corporation; 500 U/g) was then added to the green tea extract to give a concentration of 430 ppm. The solution was kept for 55 minutes. The solution was then heated to 90°C, at which the solution was kept for 2 minutes to inactivate the enzyme so that the reaction was terminated (pH 5.2). Under the conditions of 70°C and 6.7 kpa, concentration processing was performed to a Brix concentration of 20% by reduced-pressure concentration. Further, the concentrate was spray-dried to afford a powdery, tannase-treated catechin preparation (v) (1.0 kg). The content of non-polymer catechins in the solid contents in the catechin preparation (v) = 30.5 wt%, the percentage of gallate body in the catechin preparation (v) = 31.6 wt%, and the caffeine/catechins ratio of the catechin preparation (v) = 0.183.

### (Production of catechin preparation (vi))

Acid clay ("MIZUKA ACE #600", product of Mizusawa Chemical Industries, Ltd.; 100 g) was dispersed in a 92 wt.% aqueous solution of ethanol (800 g) at ambient temperatures under the stirring conditions of 250 r/min. After stirring was conducted for approx. 10 minutes, a mixture of the catechin preparation (iv) (120 g) and the catechin preparation (v) (80 g) was poured, and still at room temperature, stirring was continued for approx. 3 hours (pH 4.1). Subsequently, the formed precipitate and the acid clay were filtered off by No. 2 filter paper. Deionized water (417 g) was added to the thus-obtained filtrate, and stirring was conducted at 15°C for approx. 5 minutes under the stirring conditions of 100 r/min. From the mixture, the precipitated turbid components were separated at the operation temperature of 15°C (6,000 rpm, 5 minutes) by using a small cooled centrifuge (manufactured by Hitachi Koki Co., Ltd.). The separated solution was brought into contact with activated carbon ("KURARAY COAL GLC" , product of Kuraray Chemical Co., Ltd.; 30 g), and without a break, was filtered through 0.2µm membrane filter. The filtrate was freeze-dried to afford a catechin preparation (vi) .

In the solid contents in the catechinpreparation (vi), the content of non-polymer catechins = 59.5 wt%, the percentage of gallate body = 44.1 wt%, the catechins/tannins ratio = 0.928, and the water percent = 4.6 wt%.

### (Production of catechin preparation (vii))

The catechin preparation (v) (85 g) was dissolved under stirring at 25°C in deionized water (8,415 g) in the course of 30 minutes (tannase-treated solution). A synthetic adsorbent "SP-70" (product of Mitsubishi Chemical Corporation; 2 , 048 mL) was packed in a stainless steel column 1 (110 mm inner diameter x 230 mm height, volume: 2,185 mL). The tannase-treated solution (8,200 g, 4 volumes relative to the synthetic adsorbent) was allowed to pass at SV = 1 (h⁻¹) through the column 1, and the outflow was discarded. The column 1 was then washed at SV = 1 (h⁻¹) with water (2, 048 mL, one volume relative to the synthetic adsorbent). Subsequent to washing with water, 50 wt% aqueous solution of ethanol (4, 096 mL, 2 volumes relative to the synthetic adsorbent) was allowed to pass at SV = 1 (h⁻¹) to afford a "resin-treated product 1" (4,014 g, pH 4.58). Non-polymer catechins were contained at 1.89 wt% in the extract, and the percentage of gallate body in the non-polymer catechin composition was 36.2 %. Further, the content of caffeine was 0.281 wt%. The content of non-polymer catechins in the solid contents in the tea extract was 60.1 wt%. Granular activated carbon "TAIKO SGP" (product of Futamura Chemical Co., Ltd.; 8.5 g) was then packed in a stainless steel column 2 (22 mm inner diameter x 145 mm height, volume: 55.1 mL). The "resin-treated product 1" (1,000 g) was allowed to pass at SV = 1 (h⁻¹) through the column 2 (the amount of the activated carbon was 0.4 times relative to the amount of the tannase-treated green tea extract). The outflow was then freeze-dried to afford a catechin preparation (vii). In the solid contents in the catechin preparation (vii), the content of non-polymer catechins = 77.6 wt%, the percentage of gallate body = 26.1 wt%, the catechins/tannins ratio = 1.072, and the water percentage = 3.7 wt%.

**Table 1**

| | | Unit: weight parts | | | | | |
|---|---|---|---|---|---|---|---|
| Ingredients | Product names of ingredients | Names of ingredient manufacturers | Examples | | | | |
| | | | 1 | 2 | 3 | 4 | 5 |
| - Sponge dough - | | | | | | | |
| Hard wheat flour | "CAMELIA" | Nisshin Flour Milling Inc. | 70.00 | 70.00 | 70.00 | 70.00 | 70.00 |
| Yeast | "ORIENTAL YEAST" | Oriental Yeast Co., Ltd. | 2.00 | 2.00 | 2.00 | 2.00 | 2.00 |
| Yeast food | "C FOOD" | Oriental Yeast Co., Ltd. | 0.10 | 0.10 | 0.10 | 0.10 | 0.10 |
| Emulsion preparation | "EMALUSY MM-100" | Riken Vitamin Co., Ltd. | 0.30 | 0.30 | 0.30 | 0.30 | 0.30 |
| Water | | | 40.0 | 40.0 | 40.0 | 40.0 | 40.0 |

| -Main dough - | | | | | | | |
|---|---|---|---|---|---|---|---|
| Hard wheat flour | "CAMELLIA" | Nisshin Flour Milling Inc. | 30.00 | 30.00 | 30.00 | 30.00 | 30.00 |
| White superior soft sugar | "JYOHAKUTO ST" | Dai-Nippon Meiji Sugar Co., Ltd. | 5.00 | 5.00 | 5.00 | 5.00 | 5.00 |
| Salt | "SALT" | The Salt Industry Center of Japan | 2.00 | 2.00 | 2.00 | 2.00 | 2.00 |
| Skimmilk powder | "SKIMMILK POWDER" | Zenrakuren Coop. Assn. | 2.00 | 2.00 | 2.00 | 2.00 | 2.00 |
| Catechin preparation (i) | "POL-JK" | Mitsui Norin Co., Ltd. | - | - | - | - | - |
| Catechin preparation (ii) | | Kao Corporation | 0.48 | - | 1.18 | - | - |
| Catechinpreparation (iii) | | Kao Corporation | - | 0.32 | - | 0.80 | - |
| Catechin preparation (vi) | | Kao Corporation | - | - | - | - | 0.34 |
| Catechin preparation (vii) | | Kao Corporation | - | - | - | - | - |
| Shortening | "NEWECONAV" | Kao Corporation | 5.00 | 5.00 | 5.00 | 5.00 | 5.00 |
| water | | | 25.00 | 25.00 | 25.00 | 25.00 | 25.00 |
| Amount of catechins (per 100 weight parts of grain flour) | | | 0.2 | 0.2 | 0.5 | 0.5 | 0.2 |

| Ingredients | Product names of ingredients | Names of ingredient manufacturers | Ex. | Comp. Ex. | | Cont. Ex. | |
|---|---|---|---|---|---|---|---|
| | | | 6 | 1 | 2 | | |
| - Sponge dough | | | | | | | |
| Hard wheat flour | "CAMELLIA" | Nisshin Flour Milling Inc. | 70.00 | 70.00 | 70.00 | 70.00 | |
| Yeast | "ORIENTAL YEAST" | Oriental Yeast Co., Ltd. | 2.00 | 2.00 | 2.00 | 2.00 | |
| Yeast food | "C FOOD" | Oriental Yeast Co., Ltd. | 0.10 | 0.10 | 0.10 | 0.10 | |
| Emulsion preparation | "EMALUSY MM-100" | Riken Vitamin Co., Ltd. | 0.30 | 0.30 | 0.30 | 0.30 | |
| Water | | | 40.0 | 40.0 | 40.0 | 40.0 | |

| - Main dough - | | | | | | | |
|---|---|---|---|---|---|---|---|
| Hard wheat flour | "CAMELIA" | Nisshin Flour Milling Inc. | 30.00 | 30.00 | 30.00 | 30.00 | |
| White superior soft sugar | "JYOHAKUTO ST" | Dai-Nippon MeijiSugar Co., Ltd. | 5.00 | 5.00 | 5.00 | 5.00 | |
| Salt | "SALT" | The Salt Industry Center of Japan | 2.00 | 2.00 | 2.00 | 2.00 | |
| Skimmilk powder | "SKIMMILK POWDER" | Zenrakuren Coop. Assn. | 2.00 | 2.00 | 2.00 | 2.00 | |
| Catechin preparation (i) | "POL-JK" | Mitsui Norin Co., Ltd. | - | 0.66 | 1.63 | - | |
| Catechin preparation (ii) | | Kao Corporation | - | - | - | - | |
| Catechin preparation (iii) | | Kao Corporation | - | - | - | - | |
| Catechin preparation (vi) | | Kao Corporation | - | - | - | - | |
| Catechin preparation (vii) | | Kao Corporation | 0.26 | - | - | - | |
| Shortening | "NEWECONAV" | Kao Corporation | 5.00 | 5.00 | 5.00 | 5.00 | |
| Water | | | 25.00 | 25.00 | 25.00 | 25.00 | |
| Amount of catechins (per 100 weight parts of grain flour) | | | 0.2 | 0.2 | 0.5 | 0.0 | |

### Examples 1-6 & Comparative Examples 1-2

### <Making conditions for white loaves>

Using the ingredients described in Table 1 in the amounts also described in Table 1, breads of Examples 1-6 and Comparative Examples 1-2 were made by the following procedures.

### 1. Preparation conditions for sponges

Using a vertical mixer ("KANTO MIXER Model: SS", 10 quarts, equipped with a dough hook), sponge ingredients were placed in the mixer, and mixed and kneaded at low speed for 3 minutes and then at medium-high speed for 2 minutes to a final dough temperature of 24.0 ± 0.5°C to provide a sponge. The sponge was then subjected to fermentation (sponge fermentation). The followings are conditions for the sponge fermentation.
Sponge fermentation temperature: 28°C
Sponge fermentation relative humidity: 80%
Sponge fermentation time: 4 hours and 30 minutes
Sponge fermentation finish temperature: 29.5°C

### 2. Preparation conditions for main dough

In a vertical mixer ("KANTO MIXER Model: SS", 10 quarts, equipped with a dough hook), the fermented sponge dough was placed, followed by the addition of the main dough ingredients (all the ingredients except for the shortening; upon their addition, the catechin preparation was added as an admixture with the sugar). Subsequent to mixing and kneading at low speed for 3 minutes and then at medium-low speed for 3 minutes, the shortening was added. The dough was mixed and kneaded at low speed for 3 minutes, at medium-low speed for 3 to 5 minutes, and then at high speed for 1 to 7 minutes to prepare a main dough. The final temperature of the main dough was from 26.0 to 26.5°C.

To restore the dough damaged as a result of the mixing and kneading, the dough was given a floor time of 28.0°C for 20 minutes, and was then divided into pieces of 225 g each. To restore the damage to the dough as a result of the division, the dough pieces were given a bench time of 28.0°C for 20 minutes, and were then shaped by a molder. Six shaped dough pieces were placed in a lidded loaf tin, and were then subjected to proofing (in a final proofer). Proofing conditions were as follows.
Final proofer temperature: 38°C
Relative humidity: 80% RH
Proofing time: 60 minutes

The bread dough prepared under the above-described conditions was baked for 40 minutes in an oven controlled at 210°C. Subsequent to the baking, the bread was cooled at 20°C for 60 minutes. The bread was then placed and sealed in a polyethylene bag, and was then stored at 20°C for 3 days. Using a slicer, the bread was cut into slices of 20 mm thickness each. Those slices were provided as assessment samples. The results are presented in Table 2.

### <Assessment methods>

### (1) Measurement of color difference

To make a color assessment of a central portion of a crumb of each slice of each white loaf, the color difference was measured using a spectral colorimeter ("SPECTRO COLOR METER SE2000", manufactured by Nippon Denshoku Industries Co., Ltd.).

### (2) Measurement of volume

From each white loaf sliced in thicknesses of 20 mm, the 3^{rd}, 7^{th}, 10^{th}, 14^{th} and 17^{th} slices as counted from an end of the loaf were sampled.

Using a laser volume measurement system "WIN VM200" (manufactured by ASTEX Research & Development Co., Ltd.), the volume of each slice of which the weight had been measured beforehand was measured. The specific volume of the loaf was calculated by dividing the thus-determined volume with the weight. The measurement mode was set at the 2CCD precision measurement.

### (3) Measurement of compression stress

From a central part of the crumb of each sliced loaf, a piece of 20 mm thickness × 30 mm height × 30 mm width was cut out to provide a measurement sample.

With respect to the sample, the stress upon 50% compression in the direction of the thickness was measured using a texture analyzer "EZTest" (manufactured by Shimadzu Corporation).

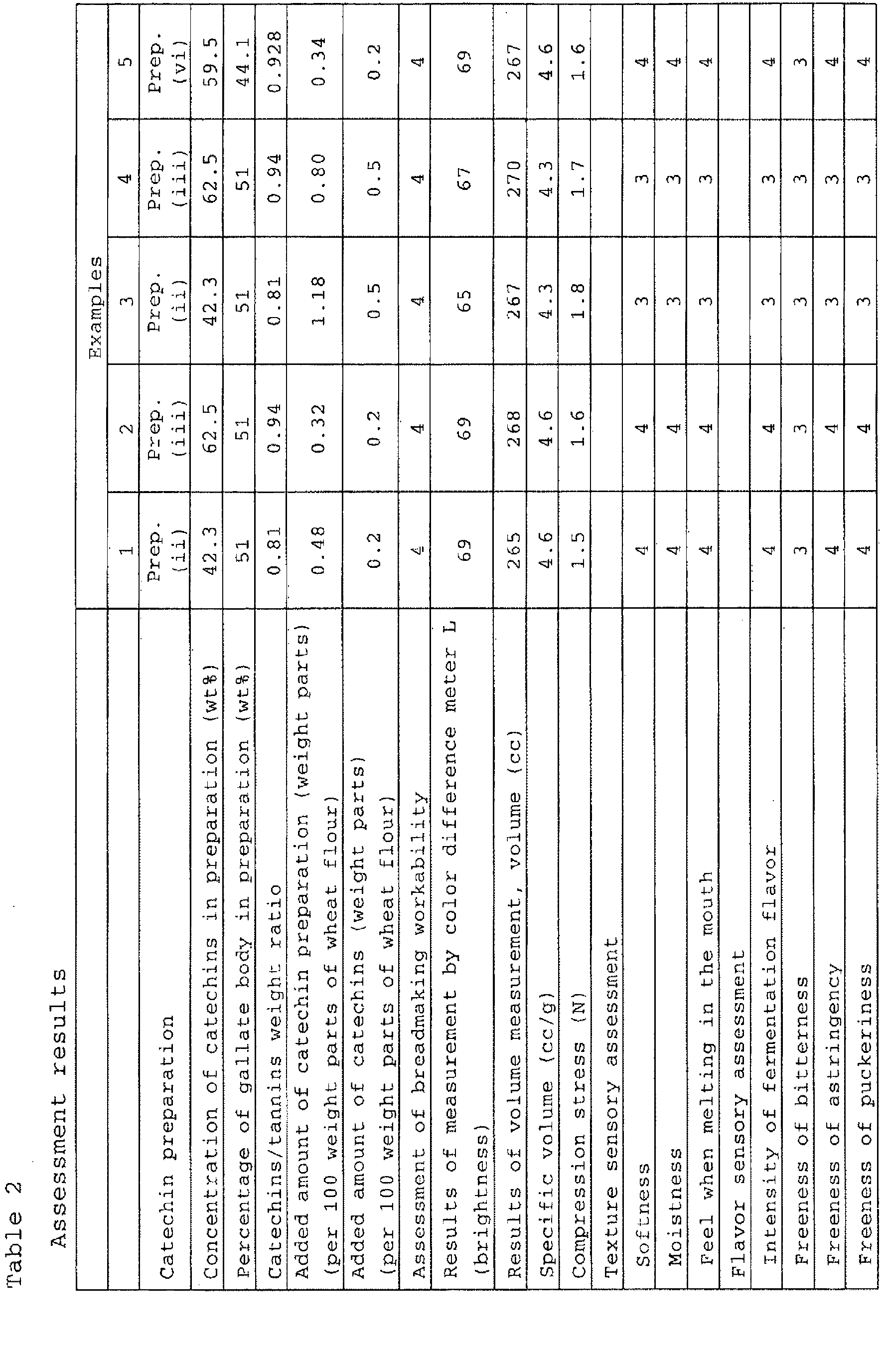

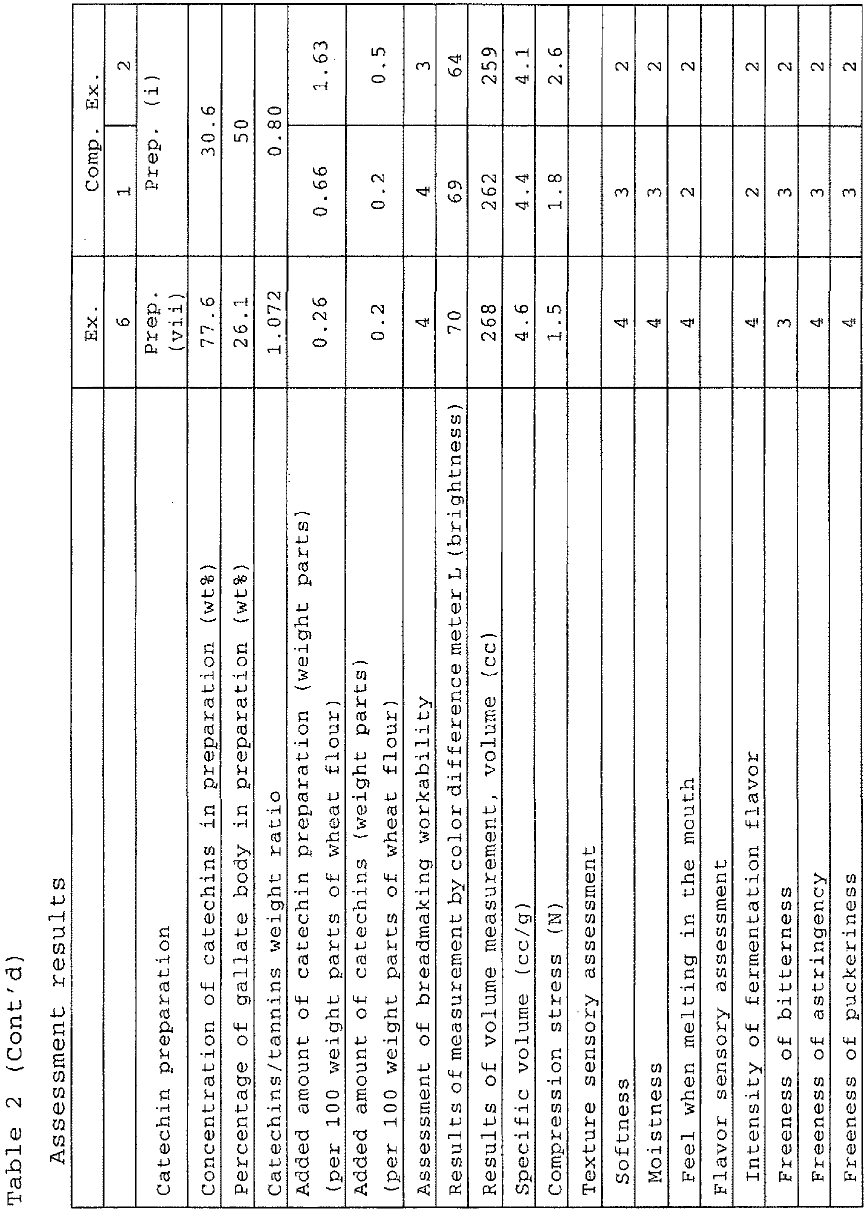

### <Assessment of breadmaking workability >

For the assessment of breadmaking workability, an assessment was performed concerning the non-stickiness of each main dough shortly after its kneading and the non-stickiness of the corresponding dough at the time of its division after the floor time in comparison with the corresponding properties in the case of non-addition of catechins.
4 : Like white loaves not added with catechins, the non-stickinesses involve practically no problem and are good.
3: Compared with white loaves not added with catechins, the non-stickinesses are slightly inferior but are still of good level.
2: Compared with white loaves not added with catechins, the non-stickinesses are inferior but are still of workable level.
1: Compared with white loaves not added with catechins, the non-stickinesses are very inferior and are of hardly workable level.

<Sensory assessments of texture and flavor>
4: Like white loaves not added with catechins, the texture and flavor involve practically no problem and are good.
3: Compared with white loaves not added with catechins, the texture and flavor are slightly inferior but are still of good level.
2: Compared with white loaves not added with catechins, the texture and flavor are inferior but are still of edible level.
1: Compared with white loaves not added with catechins, the texture and flavor are very inferior and are of inedible level.

As is evident from Tables 1 and 2, the loaves with the catechin preparation (ii), (iii), (vi) or (vii) added therein were each confirmed to retain a bright color inherent to its crumb and to be improved in volume compared with those containing the comparative catechin preparation (the catechin preparation (i)) added therein such that the amount of catechins added became the same.

In physical properties, they were free from such a hardness increase as those observed on the loaves added with the comparative catechin preparation (the catechin preparation (i)), and as a result, were improved in softness in comparison with the loaves added with the comparative catechin preparation. Concerning the texture, it was also confirmed that the moistness was improved and also that the tendency of becoming lumpy in the mouth and making it difficult to swallow was reduced and the feel when melting in the mouth was improved.

Furthermore, the fermentation flavor, a flavor inherent to bread, was retained.

As to the flavor inherent to catechins, the loaves added with the catechin preparation (ii), (iii), (vi) or (vii) were less in the emergence of bitterness, astringency and puckeriness and were preferred in flavor compared with the loaves added with the comparative catechin preparation (the catechin preparation (i)).

## Claims

1. A bread obtainable by adding a purified product of catechins-containing plant extract to grain flour such that from 0.2 to 0.5 weight parts of catechins can be incorporated per 100 weight parts of the grain flour, and then conducting baking, wherein a ratio of a content of catechins as measured by high-performance liquid chromatography to a content of tannins as measured by the ferrous tartrate method in the purified product of the catechins-containing plant extract is from 0.81 to 1.10.

2. The bread according to claim 1, wherein the purified product of the catechins-containing plant extract is a purified product of green tea extract.

3. The bread according to claim 1 or 2, which is obtainable by adding the purified product of the catechins-containing plant extract in a powder form having a water percentage lower than 10 wt%.

4. The bread according to any one of claims 1 to 3, which is selected from the group consisting of white loaves, sandwich rolls, sweet buns, special breads, and breads in which a filling is stuffed into any one of the white loaves, the sandwich rolls, the sweet buns and the special breads.

## Patentansprüche

1. Brot, erhältlich durch Zugabe eines gereinigten Erzeugnisses aus Catechin enthaltendem Pflanzenextrakt zu Getreidemehl, so dass 0,2 bis 0,5 Gewichtsteile an Catechinen pro 100 Gewichtsteilen des Getreidemehls eingebracht werden können, und dann Durchführen des Backens, worin das Gehaltsverhältnis von Catechinen, gemessen durch Hochleistungs-Flüssigkeitschromatographie, zu dem Gehaltsverhältnis von Tanninen, gemessen durch das Eisentartratverfahren, im gereinigten Erzeugnis aus Catechin enthaltendem Pflanzenextrakt von 0,81 bis 1,10 ist.

2. Brot gemäß Anspruch 1, worin das gereinigte Erzeugnis aus Catechin enthaltendem Pflanzenextrakt ein gereinigtes Erzeugnis aus Grünteeextrakt ist.

3. Brot gemäß Anspruch 1 oder 2, das durch Zugabe des gereinigten Erzeugnisses aus Catechin enthaltendem Pflanzenextrakt in Pulverform mit einem Wasserprozentwert von weniger als 10 Gew.% erhältlich ist.

4. Brot gemäß irgendeinem der Ansprüche 1 bis 3, das aus der Gruppe bestehend aus Weißbrotlaib, Sandwichrollen, Süßgebäck, Spezialbrot und Brot, in dem eine Füllung in irgendeines aus dem Weißbrotlaib, den Sandwichrollen, dem Süßgebäck und dem Spezialbrot gefüllt ist, ausgewählt ist.

## Revendications

1. Pain pouvant être obtenu en ajoutant un produit purifié d'un extrait de plante contenant des catéchines à une farine de grains de sorte que de 0,2 à 0,5 parties en poids de catéchines puissent être incorporées pour 100 parties en poids de la farine de grains, et ensuite en menant la cuisson, où un rapport d'une teneur en catéchines telle que mesurée par chromatographie liquide à haute performance sur une teneur en tanins telle que mesurée par la méthode de tartrate ferreux dans le produit purifié de l'extrait de plante contenant des catéchines est de 0,81 à 1,10.

2. Pain selon la revendication 1, dans lequel le produit purifié de l'extrait de plante contenant des catéchines est un produit purifié d'un extrait de thé vert.

3. Pain selon la revendication 1 ou 2, qui peut être obtenu en ajoutant le produit purifié de l'extrait de plante contenant des catéchines sous forme de poudre ayant un pourcentage d'eau inférieur à 10% en poids.

4. Pain selon l'une quelconque des revendications 1 à 3, qui est choisi dans le groupe constitué de pains blancs, de petits pains à sandwichs, de petits pains sucrés, de pains spéciaux, et de pains où une garniture est fourrée dans l'un quelconque des pains blancs, des petits pains à sandwichs, des petits pains sucrés et des pains spéciaux.
